# EUROPEAN PATENT APPLICATION

(11) **EP 4 703 595 A1**
(43) Date of publication of application: **04.03.2026**
(21) Application number: 24196400.6
(22) Date of filing: 26.08.2024
(51) Int. Cl.: F16B 19/10

(54) **A BLIND FASTENER, SETTING TOOL AND METHOD**

(71) Applicant: Newfrey LLC, New Britain, CT 06053 (US)
(72) Inventor: VORDERBRÜGGEN, Julian, 35394 Gießen (DE); REIS, Christian, 35394 Gießen (DE)
(74) Representative: SBD IPAdmin

(57) **Abstract**

A blind fastener (100) arranged to secure one or more workpieces (102, 104) comprising a bolt (106) comprising a head (108) having a first threaded portion (110) arranged to threadedly engage with a tool threaded portion (146) in a setting tool (112) and a shank (114) having a second threaded portion (116), the head (108) being arranged to detach from the shank (114) when the setting tool (112) exceeds a threshold torque on the head (108). The blind fastener further comprises a sleeve (118) arranged to receive the bolt (106) and having an internal threaded portion (122) for threadedly engaging with the second threaded portion (116) of the bolt (106) wherein the sleeve (118) comprises a deformable portion (124) arranged to form a bulb (126) when the blind fastener (100) is inserted into the one or more workpieces (102, 104) and the setting tool (112) is threadedly engaged with the head (108) and exerts a pulling force on the head (108).

## Description

### Field

The technology relates to the field of fastening systems, specifically to blind fasteners like blind rivets used for securing and permanently fastening joints in various applications, such as, for example, aerospace, solar or automotive industries.

### Background

Structural blind rivets are widely used for secure and permanent fastening of joints, notably metal joints, in various applications. These rivets are typically installed from one side of the joint and provide high strength and stability in the joint shear plane.

An example of a blind fastener is shown in EP 1 635 994 wherein the blind fastener has a sleeve portion and pin member which are threadedly engaged together. The sleeve portion comprises recesses which are required to engage with a nose assembly of a setting tool. The nose assembly allows a relative motion of the pin with regard to the sleeve. More particularly, the nose assembly keeps a flange of the sleeve stationary and rotates the pin member with respect to the sleeve . This means that the sleeve is pulled towards the flange as the pin rotates and causes the sleeve to deform into a bulb. A problem with this arrangement is that there may not be adequate engagement between the sleeve and the nose assembly. This means misalignment can cause the sleeve to be damaged during installation. Furthermore, the fastener needs a specific geometry with a tool recess to ensure that the flange of the sleeve remains stationary during the installation. This reduces aerodynamic performance of the joint and can cause problems for paint adhesion on the assembly.

### Summary

Examples of the present disclosure aim to address the aforementioned problems.

According to an aspect of the present disclosure there is a blind fastener according to claim 1. More particularly, the blind fastener is arranged to secure one or more workpieces and comprises:
a bolt comprising a head having a first threaded portion arranged to threadedly engage with a tool threaded portion in a setting tool and a shank having a second threaded portion, the head being arranged to detach from the shank when the setting tool exceeds a threshold torque on the head; and
a sleeve arranged to receive the bolt and having an internal threaded portion for threadedly engaging with the second threaded portion of the bolt wherein the sleeve comprises a deformable portion arranged to form a bulb when the blind fastener is inserted into the one or more workpieces and the setting tool is threadedly engaged with the head and exerts a pulling force on the head.

The threaded portion on the head is able to transmit high axial pull forces. During the installation process, the stress exerted on the head and therefore on the thread is about six times higher during axial pulling than during rotating and torquing the bolt. s a result, incorporating a threaded portion on the head provides enhanced strength for the pulling action.

In an embodiment, the head comprises a drive feature configured to engage a reciprocal drive element mounted on setting tool wherein the reciprocal drive element is configured to rotate the head when in threaded engagement with the setting tool. The head can easily be unscrewed from the setting tool.

In an embodiment, the drive feature is one or more of a hexagonal socket, a square socket, a slot, a projecting hexagonal stud, a projecting square stud, a projecting rib. Such drive feature is easy to manufacture and to use for unscrewing the head.

In an embodiment, the first threaded portion is arranged to be unscrewed from the tool threaded portion after the head is detached from the shank.

In an embodiment, the first threaded portion is configured to move the shank towards the sleeve after the bulb is formed. The axial position of the bolt with regard to a surface of a workpiece can be adjusted through the first threaded portion, even after the bulb is formed.

In an embodiment, the dimensions of the first threaded portion are different from the second threaded portion.

In an embodiment, the different dimensions are a thread pitch, a longitudinal length along a longitudinal fastener axis, a thread depth, and or an effective thread diameter.

In an embodiment, the deformable portion comprises a band annealed section. This offers improved ductility and formability.

In an embodiment, the deformable portion comprises a sleeve wall having a sleeve wall thickness thinner than portion of the sleeve comprising the internal threaded portion. This ensures a correct formation of the bulge.

In an embodiment, the shank comprises a smooth shank portion between the second threaded portion and the head.

In an embodiment, the smooth shank portion is connected to the second threaded portion with a ramp portion which reduces from a first bolt diameter at the smooth shank portion to a second bolt diameter at the second threaded portion.

In an embodiment, the bolt comprises a break-off groove arranged to shear when the setting tool exceeds the threshold torque applied to the head.

In an embodiment, a length of the first threaded portion in a direction along a longitudinal fastener axis is greater than the length that the deformable portion can deform along the longitudinal fastener axis.

In an embodiment, the shank is arranged to be flush with a sleeve head of the sleeve after the head has been separated from the shank.

In an embodiment, the pitch of the second threaded portion is smaller than the pitch of the first threaded portion. This allows for finer adjustment and increased precision in the threaded connection of the head.

The present invention is also directed to a setting tool for setting a blind fastener as disclosed comprising a nose piece with a tool threaded portion configured to engage the first threaded portion and pull the head in a direction along a longitudinal fastener axis. The nosepiece comprises a drive element configured to engage an end of the head and rotate the head with respect to the nose piece such that the head moves in a direction along the longitudinal fastener axis.

Finally, the present invention is directed to a method of setting a blind fastener having a bolt and a sleeve, wherein the bolt comprises a head having a first threaded portion and a shank having a second threaded portion and the sleeve comprises an internal threaded portion configured to be threadedly engaged with the second threaded portion and a deformable portion arranged to form a bulb. The method comprises the steps of:
threadedly engaging the first threaded portion of a head with a setting tool having a reciprocal tool threaded portion;
inserting the blind fastener into one or more workpieces;
pulling the head with respect to the sleeve in order to deform the deformable portion and create the bulb;
rotating the head with respect to the sleeve such that the head and shank move towards the sleeve; and
detaching the head from the shank by exerting a torque on the head.

In an embodiment, the method comprises the step of rotating the head with respect to the tool threaded portion until the first threaded portion is not in threaded engagement with the tool threaded portion.

### Brief Description of the Drawings

Various other aspects and further examples are also described in the following detailed description and in the attached claims with reference to the accompanying drawings, in which:
Figure 1a shows a perspective view of a blind fastener according to some examples;
Figure 1b shows a cross-sectional view of the blind fastener as shown in Figure 1a according to some examples;
Fig. 1c shows a cross-sectional view of a second embodiment of a sleeve of a blind fastener according to the invention;
Figure 2 shows a perspective cross-sectional view of part of the blind fastener together with a setting tool according to some examples;
Figures 3a to 3d show a cross-sectional view of a blind fastener in sequential steps of setting the blind fastener to a workpiece according to some examples;
Figures 4a to 4d show perspective cross-sectional views of the blind fastener together with the setting tool in sequential steps of setting the blind fastener to some examples; and
Figures 5a to 5d show perspective views of a blind fastener according to different examples.

### Detailed Description

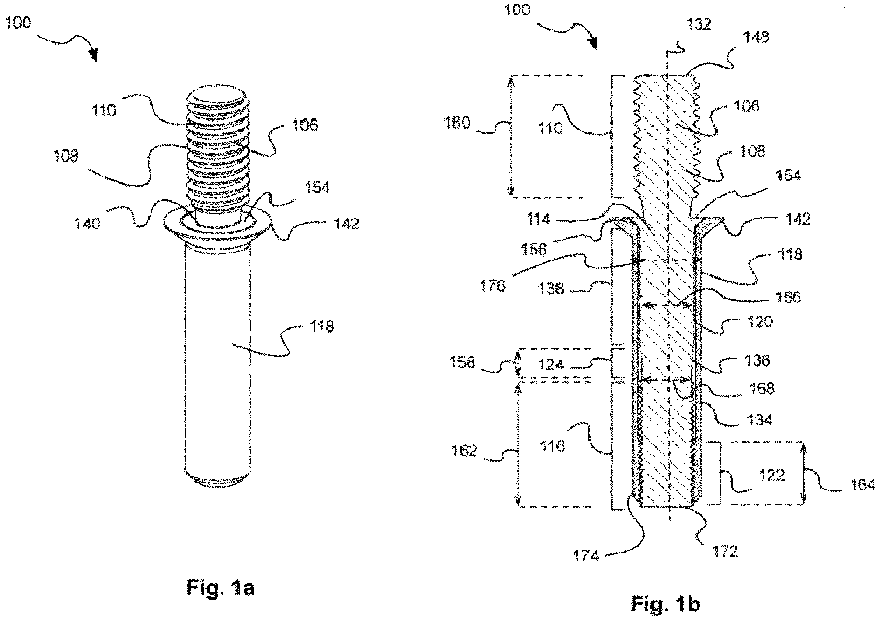

Figure 1a shows a perspective view of a blind fastener 100 having a bolt 106 and a sleeve 118. The bolt 106 is configured to be received within the sleeve 118 in an internal sleeve bore 120.

The bolt 106 comprises a head 108 which is removably connected to a shank 114. The head 108 is configured to be detached from the shank 114 when a force is applied to the head 108 that exceeds a threshold detachment force.

Specifically, the head 108 comprises a break-off groove 140 which is frangible. As shown in figure 1a, the break-off groove 140 is a circumferential groove around a portion of the bolt 106 between the head 108 and the shank 114. In some examples, the break-off groove 140 provides a thinner part of the bolt 106, which is arranged to break. The head 108 is configured to be detached from the shank 114 such that the shank 114 is flush with the sleeve 118.

In some examples, the head 108 is configured to detach from the shank 114 when a setting tool 112 applies a torque to the head 108 above a predetermined threshold torque.

As shown in figure 1b, the bolt 106 is received within a sleeve 118. Figure 1b shows a cross-sectional view of the blind fastener 100 as shown in Figure 1a.

The bolt 106 extends along a longitudinal fastener axis 132 from a bolt head end 148 to a bolt tail end 172. When the bolt 106 is assembled with the sleeve 118 prior to setting on a first workpiece 102, the sleeve 118 is also aligned along the longitudinal fastener axis 132.

The bolt 106 comprises a first threaded portion 110. The first threaded portion 110 extends in a direction along the longitudinal fastener axis 132 for a first threaded portion length 160. In some examples the first threaded portion length 160 is a substantial length of the head 108. As shown in figure 1b the first threaded portion 110 extends along nearly all the length of the head 108 in a direction along the longitudinal fastener axis 132.

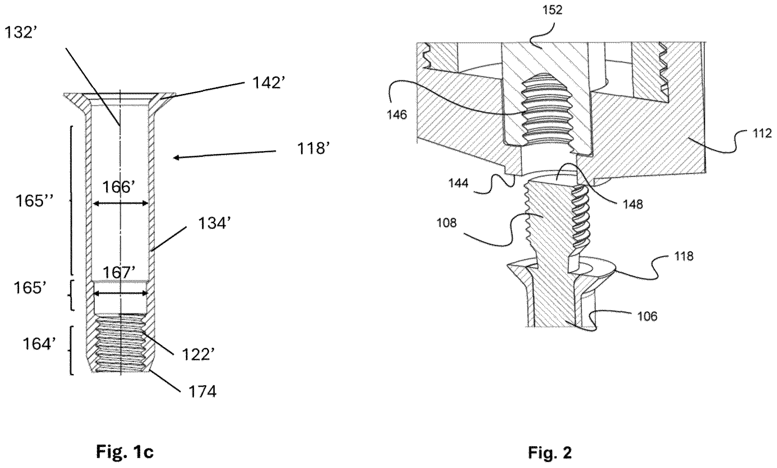

The first threaded portion 110 is arranged to be received in a tool threaded portion 146 of the setting tool 112. Accordingly, the first threaded portion 110 is threadedly engaged with the tool threaded portion 146 of the setting tool 112. The setting tool 112 is best shown in figure 2 below which will be described in more detail with respect to figure 2.

Turning back to figure 1b the bolt 106 comprises a smooth shank portion 138 adjacent to the head 108. The smooth shank portion 138 comprises a smooth outer surface and a first bolt diameter 166 as shown in figure 1b. The smooth shank portion 138 is connected to a ramp portion 136 which decreases in diameter to a second bolt diameter 168. The first bolt diameter 166 is greater than the second bolt diameter 168. In this way the bolt 106 reduces in diameter towards the bolt tail end 172.

A second threaded portion 116 is attached to the ramp portion 136. The second threaded portion 116 has a second threaded portion length 162 extending in a direction parallel to the longitudinal fastener axis 132. The second threaded portion 116 is configured to be received in an internal threaded portion 122 of the sleeve 118.

Accordingly, the second threaded portion 116 is threadedly engaged with the internal threaded portion 122 of the sleeve 118.

In some examples, as shown in the Figures, the first threaded portion 110 is different from the second threaded portion 116. In some examples the differences between the first threaded portion 110 and the second threaded portion 116 relate to the dimensions and parameters of the threads.

For example, the first threaded portion 110 can have a different thread pitch, longitudinal length along the longitudinal fastener axis 132, a different thread depth and/or a different effective thread diameter. Indeed, the first threaded portion 110 can have any thread parameter different from the second threaded portion 116. In some examples it may be preferable to have different thread parameters for the first threaded portion 110 and the second threaded portion 116.

This means that different torque requirements are needed to rotate the first threaded portion 110 when compared to the second threaded portion 116. Accordingly, it is possible to rotate the first threaded portion 110 in e.g. the tool threaded portion 146 but keep the second threaded portion 116 fixed with respect to the sleeve 118. This is because there are different frictional forces due to the different parameters of the first threaded portion 110 and the second threaded portion 116.

In some examples, the pitch of the second threaded portion 116 is smaller than the pitch of the first threaded portion 110. This means that the mechanical advantage of the second threaded portion 116 is greater than the first threaded portion 110. This means the second threaded portion 116 is easier to rotate than the first threaded portion 110. Accordingly, when the first threaded portion 110 is threadedly engaged with the tool threaded portion 146 and the second threaded portion 116 is threadedly engaged with the internal threaded portion 122, the second threaded portion 116 is easier to turn than the first threaded portion 110. This means that when the setting tool 112 rotates the head 108, the second threaded portion 116 will preferentially rotate with respect to the tool threaded portion 146 rather than the first threaded portion 110 rotating with respect to the tool threaded portion 146.

The sleeve 118 as shown in figure 1b extends from a sleeve head 142 to a sleeve tail end 174 in a direction along the longitudinal fastener axis 132. The internal threaded portion 122 extends in a direction along the longitudinal fastener axis 132 by an internal threaded portion length 164. The internal threaded portion 122 is located at the sleeve tail end 174.

The sleeve 118 is generally the same diameter and comprises a first sleeve diameter 176. The sleeve head 142 comprises a flared portion and increases in diameter when compared to the first sleeve diameter 176. The sleeve 118 comprises an internal sleeve bore 120 which is slightly greater in diameter than the first bolt diameter 166. This means that the bolt 106 can be inserted into the internal sleeve bore 120 in order to assemble the blind fastener 100 before setting in the first workpiece 102 and the second workpiece 104.

The internal threaded portion 122 is shorter in length than the second threaded portion 116. That is, the second threaded portion length 162 is longer than the internal threaded portion length 164. This is so that the second threaded portion 116 remains threadedly engaged with the internal threaded portion 122 during all steps of the fastener setting process.

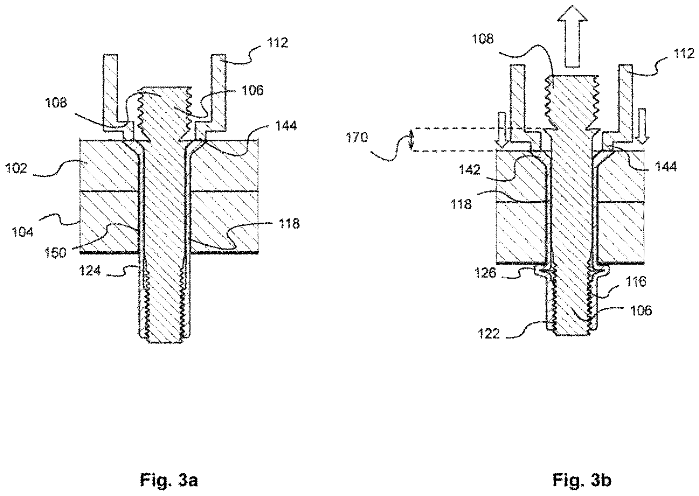

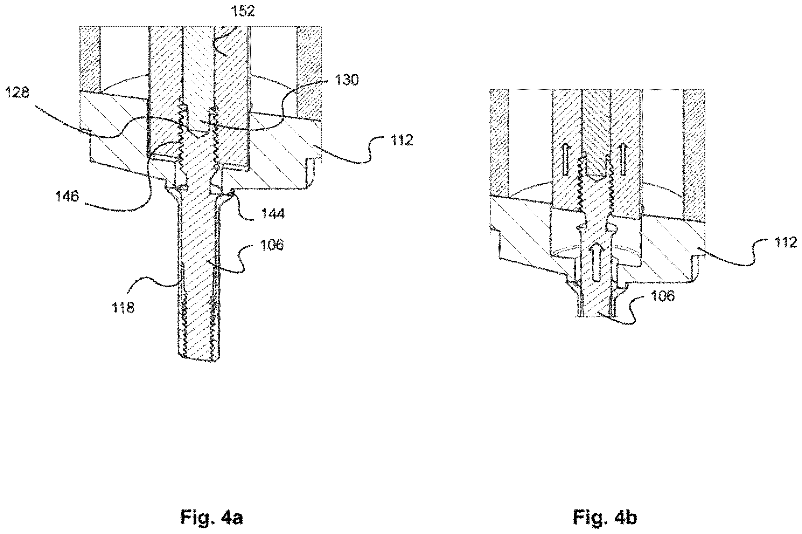

This means that the setting tool 112 can transmit a pulling force to the sleeve 118 and still rotates the bolt 106 with respect to the sleeve 118 after the pulling force has been applied to the blind fastener 100. The process of setting the blind fastener 100 will be discussed below with reference to figures 3a to 3d and 4a to 4d below.

Turning back to Figure 1b, the sleeve 118 will be discussed in more detail. The sleeve 118 comprises a deformable portion 124, between the internal threaded portion 122 and the sleeve head 142. The deformable portion 124 extends in a direction along the longitudinal fastener axis 132, by a deformable portion length 158.

The deformable portion 124 is configured to form a bulb 126, when a pulling force is exerted on the sleeve 118 via the head 108 from the setting tool 112. The setting tool 112 is arranged to apply the pulling force on the head 108 in a direction parallel to the longitudinal fastener axis 132. When the sleeve 118 experiences the pulling force, the bulb 126 is circumferentially created at the deformable portion 124.

The deformable portion 124 can be formed in one or more different ways. In a first example, the deformable portion 124 comprises a band annealed section. This means that the deformable portion 124 more easily deforms than other parts of the sleeve 118 when a pulling force is applied to the blind fastener 100. In other examples, the deformable portion 124 is created by varying the thickness of the sleeve wall 134.

The bolt 106 comprises a bolt annular collar 154 adjacent to the break off groove 140. The bolt annular collar 154 is configured to be seated in a sleeve collar recess 156 at the sleeve head 142. This means that the bolt annular collar 154 allows the bolt 106 to be correctly aligned in the sleeve 118 in a direction along the longitudinal fastener axis 132. The bolt annular collar 154 projects out from the surface of the shank 114 and comprises a tapered surface. The tapered surface allows the bolt 106 to be aligned centrally along the longitudinal fastener axis 132. That is, both the bolt 106 and the sleeve 118 are coaxial along the longitudinal fastener axis 132 when the bolt annular collar 154 is fully seated in the sleeve collar recess 156.

The ramp portion 136 of the bolt 106 means that the diameter of the shank 114 reduces from the first bolt diameter 166 to the second bolt diameter 168. This means that when the bulb 126 is formed, any inward deformation of the sleeve 118 of the deformable portion 124 that extends towards the bolt 106, does not physically engage the bolt 106. For example, the bulb 126 does not interfere with the second threaded portion 116. This allows the bolt 106 to rotate with respect to the sleeve 118 after the bulb 126 has been formed.

The sleeve may also have a geometry according to the second embodiment of the sleeve as depicted in Fig. 1c. The sleeve 118' as shown in figure 1b extends from a sleeve head 142' to a sleeve tail end 174' in a direction along the longitudinal fastener axis 132'. The internal threaded portion 122' extends in a direction along the longitudinal fastener axis 132' by an internal threaded portion length 164'. The internal threaded portion 122' is located at the sleeve tail end 174'. The sleeve wall 134' comprises a first sleeve wall portion 165' and a second sleeve wall portion 165". The first sleeve wall portion 165' has a greater thickness than the second sleeve wall portion 165" and the varying thickness of the deformable portion means that the deformable portion more easily deforms than other parts of the sleeve 118 when the pulling force is applied. This way, no band annealing is necessary.

The blind fastener 100 will now be described in more detail with reference to Figure 2. Figure 2 shows a perspective cross-sectional view of part of the blind fastener 100 together with the setting tool 112. The setting tool 112 is partially shown in Figure 2 for the purposes of clarity.

The setting tool 112 comprises a nose piece 144 which is configured to engage the sleeve head 142 during the setting process.

The head 108 of the bolt 106 is configured to be threadedly engaged into the tool threaded portion 146. The tool threaded portion 146 is mounted and operatively connected to a drive mechanism 152. The drive mechanism 152 is configured to rotate and translate with respect to the nose piece 144. The drive mechanism 152 in some examples is operatively connected to a motor assembly (not shown). The motor assembly can be electrically powered, pneumatically powered, hydraulically powered etc. The motor assembly is known and will not be discussed in any further detail.

Figure 2 shows the blind fastener 100 before the blind fastener 100 has been inserted into the first and second workpieces 102,104. The blind fastener 100 may be assembled together with the setting tool 112 prior to inserting the blind fastener 100 into the first workpiece 102 and the second workpiece 104. Alternatively, but less preferably, the setting tool 112 can be connected to the blind fastener 100 after the blind fastener 100 has been inserted into the workpiece borehole 150.

As mentioned above, the drive mechanism 152 is configured to rotate with respect to the nose piece 144. When the drive mechanism 152 is operatively connected, e.g. threadedly engaged, with the first threaded portion 110, the drive mechanism 152 is configured to rotate about the longitudinal fastener axis 132 of the blind fastener 100.

In this way, when the drive mechanism 152 rotates can threadedly engage with the first threaded portion 110. When the tool threaded portion 146 has been fully threaded onto the first threaded portion 110, the setting tool 112 has a secure connection between the head 108 and the drive mechanism 152.

This means that the setting tool 112 can apply a pulling force via the tool threaded portion 146 to the first threaded portion 110 which causes the bolt 106 to move in a direction along the longitudinal fastener axis 132. The setting tool 112 is configured to apply a pulling force to the head 108 by drawing the drive mechanism 152 in a direction away from the sleeve 118 along the longitudinal fastener axis 132. The drive mechanism 152 can be moved in a direction along the longitudinal fastener axis 132 with any suitable mechanism. For example, the drive mechanism 152 itself can be coupled to a setting tool screw mechanism (not shown) for moving the drive mechanism 152 in a direction parallel to the longitudinal fastener axis 132. Alternatively, the setting tool 112 can comprise any suitable mechanism for linearly translating the drive mechanism 152 in a direction parallel to the longitudinal fastener axis 132 e.g. a linear actuator etc.

The drive mechanism 152 is configured to rotate the bolt 106 with respect to the sleeve 118 when the sleeve 118 is inserted into the workpiece borehole 150. In some examples, the drive mechanism 152 is configured to both apply a pulling force to the head 108 and a torque to the bolt 106.

This means that the drive mechanism 152 can both pull the blind fastener 100, rotate the bolt 106 to longitudinally move the bolt 106 with respect to the sleeve 118 along the longitudinal fastener axis 132 after the pulling force has been applied, and shear the head 108 from the shank 114.

However, in some alternative examples, the entire setting tool 112 may be configured to rotate about the longitudinal fastener axis 132 in a direction away from the drive mechanism 152. In this case, the drive mechanism 152 is configured to apply the pulling force but not the torque required to rotate the bolt 106 after the pulling force has been applied.

Turning to figures 3a to 3d and 4a to 4d, the setting of the blind fastener 100 will be discussed in more detail. Figures 3a to 3d show a cross-sectional view of a blind fastener 100 in sequential steps of setting the blind fastener 100 to a first workpiece 102 and a second workpiece 104. Figures 4a to 4d show perspective cross-sectional views of the blind fastener 100 together with the setting tool 112 in the same sequential steps of setting the blind fastener 100.

Figure 3a shows the blind fastener 100 placed into the workpiece borehole 150. In order to securely connect a first workpiece 102 and a second workpiece 104, the blind fastener 100 has been threadedly engaged to the setting tool 112 as mentioned above and depicted in figure 4a.

That is, the first threaded portion 110 on the head 108 is threadedly engaged with the tool threaded portion 146. At the same time, the nosepiece 144 abuts the sleeve head 142. As shown in figures 3a and 4a, the blind fastener 100 has not been set yet.

Figure 3b and figure 4b show the step of the drive mechanism 152 and the setting tool 112 applying a pulling force to the head 108. The pulling force is in a direction along the longitudinal fastener axis 132 and away from the sleeve 118. At the same time, the nosepiece 144 is configured to apply a reactionary force against the sleeve head 142.

This prevents the sleeve 118 from being pulled out of the workpiece borehole 150 when the pulling force is applied by the setting tool 112. As the pulling force is applied to the head 108, the pulling force is transmitted from the bolt 106 to the sleeve 118 via the threaded engagement there between.

That is, the pulling force is transmitted from the bolt 106 to the sleeve 118 via the second threaded portion 116 and the internal threaded portion 122. The sleeve 118 then deforms at the deformable portion 124 and creates the bulb 126. The bulb 126 abuts the second workpiece 104 as shown in figure 3b.

The bolt 106 is pulled along the longitudinal fastener axis 132 by a raised bolt height 170. The raised bolt height 170 is smaller than the second threaded portion length 162 and the internal threaded portion length 164. This means that the bolt 106 is always in threaded engagement with the sleeve 118 during the entire setting process.

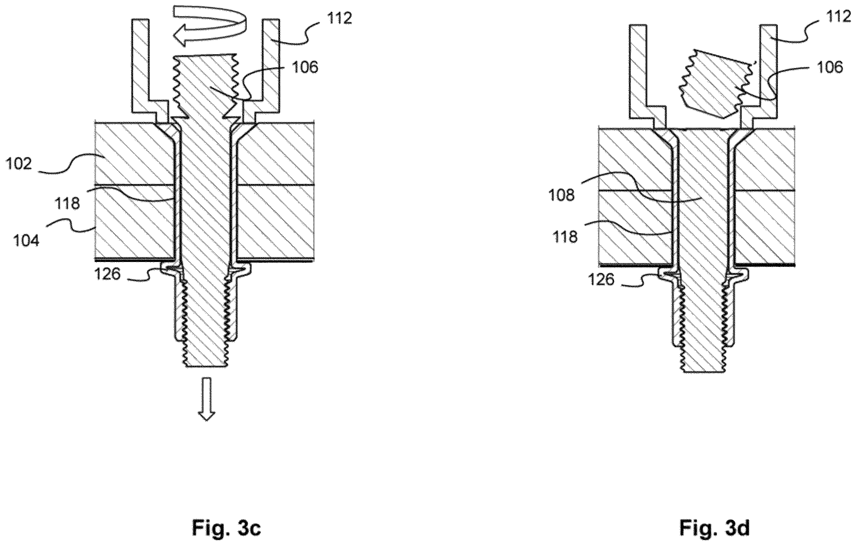

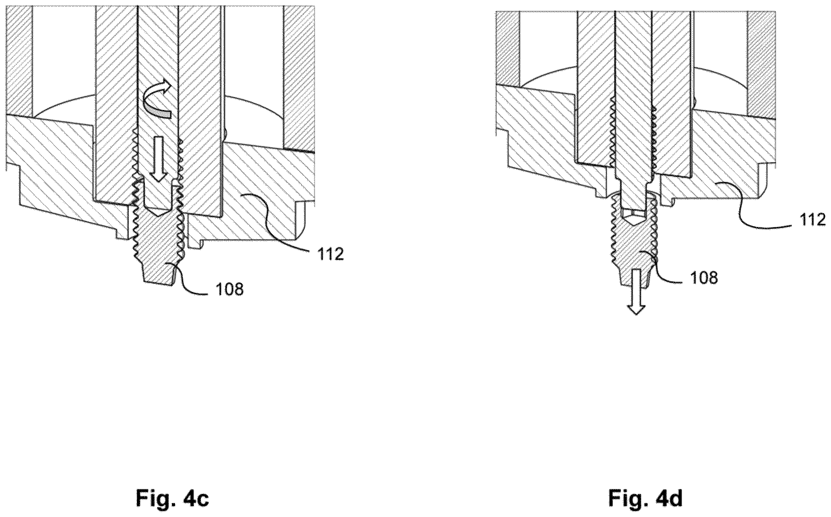

Figure 4c shows the setting tool 112 and the drive mechanism 152 rotating the bolt 106 with respect to the sleeve 118. As the bolt 106 is rotated with respect to the sleeve 118 (see figure 3c), the second threaded portion 116 screws into the internal threaded portion 122 and the bolt 106 travels in a direction along the longitudinal fastener axis 132 towards the sleeve 118 and away from the setting tool 112.

The setting tool 112 continues to rotate the bolt 106 until the bolt annular collar 154 is seated in the sleeve collar recess 156. When the bolt 106 is no longer able to screw any further into the internal threaded portion 122, the bolt 106 is fully seated in the sleeve 118.

At this point, the drive mechanism 152 continues to exert a torque on the head 108. Here the break off groove 140 fractures and the bolt 106 is shown in figure 3d where the head 108 has been sheared from the shank 114.

As shown in figure 4d, the drive mechanism 152 is arranged to rotate the bolt 106 with respect to the sleeve 118 after the head 108 has been detached from the shank 114.

The drive mechanism 152 in some examples comprises a drive element 130 configured to engage a drive feature 128. The drive element 130 of the drive mechanism 152 is shown in figures 4a to 4d engaged with the drive feature 128 of the head 108. The drive feature 128 in the head 108 is located at a bolt head end 148.

Accordingly, when the head 108 has been detached from the shank 114, the drive element 130 can unscrew the first threaded portion 110 and from the tool threaded portion 146. This means that the detached head 108 can then be discarded as shown in figure 4d.

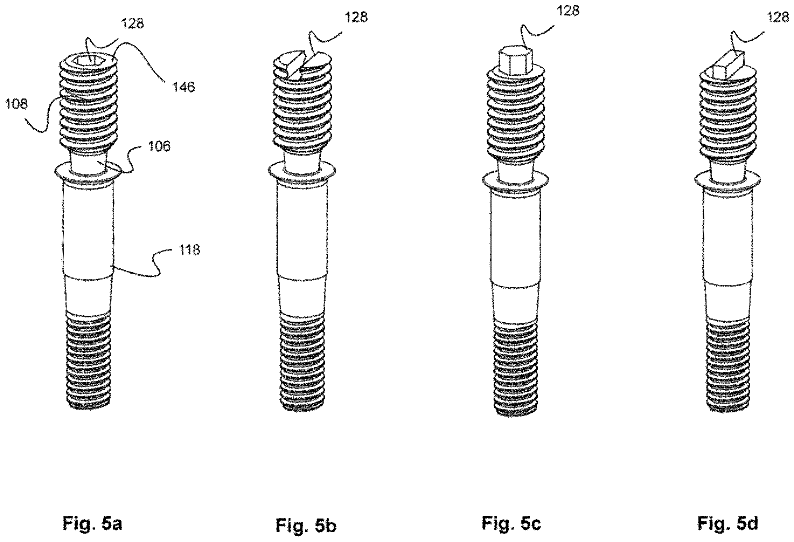

Figures 5a to 5d show perspective views of a blind fastener 100 with different drive features 128. In some examples, the head 108 can comprise different forms for the drive feature 128.

In figure 5a, the head 108 comprises a drive feature 128 with a hexagonal shaped recess. In this case, the drive element 130 comprises a reciprocally shaped hexagonal bit for engaging the hexagonal recess.

In figure 5b, the head 108 comprises a slot. In this case, the drive element 130 comprises a reciprocally shaped flat bit for engaging the slot.

In figure 5c, the head 108 comprises a projecting hexagonal shaped bit. In this case, the drive element 130 comprises a reciprocally shaped hexagonal socket for engaging the hexagonal bit.

In figure 5d, the head 108 comprises a projecting rib. In this case, the drive element 130 comprises a reciprocally shaped slot for engaging the projecting rib.

In other examples, the drive feature 128 can comprise any suitable shape for receiving a torque from the drive mechanism 152. The drive mechanism 152 comprises a reciprocally shaped drive element 130 to engage and transmit a torque to the head 108.

In other examples, the head 108 can comprise e.g. a square recess or a star shaped recess or any other suitable recess. Alternatively, the head 108 can comprise a projecting square bit or a star shaped bit or any other suitable projecting bit.

In some examples, the blind fastener 100 comprises a bolt 106 made from stainless steel AISI 316 and the sleeve 118 is made from stainless steel AISI 304 (<700 MPa UTS). In some examples the blind fastener 100 is made from the process of cold heading, thread rolling and annealing the whole of the sleeve 118.

In some other examples, the bolt 106 is made from Ti-6AI-4V (Titanium Grade 5) and the sleeve 118 is made from A286 CRES (>900 MPa UTS). In some examples, the blind fastener 100 is made from turning, thread rolling and band annealing of the deformable portion 124 on the sleeve 118. This may provide a higher strength blind fastener 100 than making the blind fastener 100 from only stainless steel.

In another example, two or more examples are combined. Features of one example can be combined with features of other examples.

Examples of the present disclosure have been discussed with particular reference to the examples illustrated. However, it will be appreciated that variations and modifications may be made to the examples described within the scope of the disclosure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A blind fastener (100) arranged to secure one or more workpieces (102, 104) comprising:
a bolt (106) comprising a head (108) having a first threaded portion (110) arranged to threadedly engage with a tool threaded portion (146) in a setting tool (112) and a shank (114) having a second threaded portion (116), the head (108) being arranged to detach from the shank (114) when the setting tool (112) exceeds a threshold torque on the head (108); and
a sleeve (118) arranged to receive the bolt (106) and having an internal threaded portion (122) for threadedly engaging with the second threaded portion (116) of the bolt (106) wherein the sleeve (118) comprises a deformable portion (124) arranged to form a bulb (126) when the blind fastener (100) is inserted into the one or more workpieces (102, 104) and the setting tool (112) is threadedly engaged with the head (108) and exerts a pulling force on the head (108).

2. The blind fastener (100) according to claim 1 wherein the head (108) comprises a drive feature (128) configured to engage a reciprocal drive element (130) mounted on setting tool (112) wherein the reciprocal drive element (130) is configured to rotate the head (108) when in threaded engagement with the setting tool (112).

3. The blind fastener (100) according to claim 2 wherein the drive feature (128) is one or more of a hexagonal socket, a square socket, a slot, a projecting hexagonal stud, a projecting square stud, a projecting rib.

4. The blind fastener (100) according to any of claims 1 to 3, wherein the first threaded portion (110) is arranged to be unscrewed from the tool threaded portion (146) after the head (108) is detached from the shank (114).

5. The blind fastener (100) according to any of the claims 2 to 4 wherein the first threaded portion (110) is configured to move the shank (114) towards the sleeve (118) after the bulb (126) is formed.

6. The blind fastener (100) according to any of the preceding claims wherein the dimensions of the first threaded portion (110) are different from the second threaded portion (116).

7. The blind fastener (100) according to claim 6 wherein the different dimensions are a thread pitch, a longitudinal length along a longitudinal fastener axis (132), a thread depth, and or an effective thread diameter.

8. The blind fastener (100) according to any of the preceding claims wherein the deformable portion (124) comprises a band annealed section.

9. The blind fastener (100) according to any of the preceding claims wherein the deformable portion (124) comprises a sleeve wall (134) having a sleeve wall (134) thickness thinner than the portion of the sleeve (118) comprising the internal threaded portion (122).

10. The blind fastener (100) according to any of the preceding claims wherein the shank (114) comprises a smooth shank portion (138) between the second threaded portion (116) and the head (108).

11. The blind fastener (100) according to claim 10 wherein the smooth shank portion (138) is connected to the second threaded portion (116) with a ramp portion (136) which reduces from a first bolt diameter (166) at the smooth shank portion (138) to a second bolt diameter (168) at the second threaded portion (116).

12. The blind fastener (100) according to any of the preceding claims wherein the bolt (106) comprises a break-off groove (140) arranged to shear when the setting tool (112) exceeds the threshold torque applied to the head (108).

13. The blind fastener (100) according to any of the preceding claims wherein a length of the first threaded portion (110) in a direction along a longitudinal fastener axis (132) is greater than the length that the deformable portion (124) can deform along the longitudinal fastener axis (132).

14. The blind fastener (100) according to any of the preceding claims wherein the shank (114) is arranged to be flush with a sleeve head (142) of the sleeve (118) after the head (108) has been separated from the shank (114).

15. The blind fastener (100) according to any of the preceding claims wherein the pitch of the second threaded portion (116) is smaller than the pitch of the first threaded portion (110).

16. A setting tool (112) for setting a blind fastener (100) according to any of claims 1 to 15 comprising:
a nose piece (144) comprising a tool threaded portion (146) configured to engage the first threaded portion (110) and pull the head (108) in a direction along a longitudinal fastener axis (132);
wherein the nosepiece (144) comprises a drive element (130) configured to engage an end (148) of the head (108) and rotate the head (108) with respect to the nose piece (144) such that the head (108) moves in a direction along the longitudinal fastener axis (132).

17. A method of setting a blind fastener (100) having a bolt (106) and a sleeve (118) wherein the bolt (106) comprises a head (108) having a first threaded portion (110) and a shank (114) having a second threaded portion (116) and the sleeve (118) comprises an internal threaded portion (122) configured to be threadedly engaged with the second threaded portion (116) and a deformable portion (124) arranged to form a bulb (126), the method comprising:
threadedly engaging the first threaded portion (110) of a head (108) with a setting tool (112) having a reciprocal tool threaded portion (146);
inserting the blind fastener (100) into one or more workpieces (102);
pulling the head (108) with respect to the sleeve (118) in order to deform the deformable portion (124) and create the bulb (126);
rotating the head (108) with respect to the sleeve (118) such that the head (108) and shank (114) move towards the sleeve (118); and
detaching the head (108) from the shank (114) by exerting a torque on the head (108).

18. The method of claim 17 wherein the method comprises rotating the head (108) with respect to the tool threaded portion (146) until the first threaded portion (110) is not in threaded engagement with the tool threaded portion (146).
